**Europäisches Patentamt**

**European Patent Office**

**Office européen des brevets**

(19)

(11) Veröffentlichungsnummer: **0 123 773**
**A1**

# (12) EUROPÄISCHE PATENTANMELDUNG

(21) Anmeldenummer: **84100097.9**

(22) Anmeldetag: **07.01.84**

(51) Int. Cl.³: **H 04 Q 7/02**

(30) Priorität: **29.04.83 DE 3315625**

(43) Veröffentlichungstag der Anmeldung: **07.11.84**
**Patentblatt 84/45**

(84) Benannte Vertragsstaaten: **AT DE FR GB NL**

(71) Anmelder: **ROBERT BOSCH GMBH, Postfach 50, D-7000 Stuttgart 1 (DE)**

(72) Erfinder: **Rings, Christian, Kilstetter Strasse 61, D-1000 Berlin 37 (DE)**

(74) Vertreter: **Schmidt, Hans-Ekhardt, Robert Bosch GmbH Geschäftsbereich Elektronik Patent- und Lizenzabteilung Forckenbeckstrasse 9-13, D-1000 Berlin 33 (DE)**

(54) **Verfahren zum Übertragen von digitalen Rufkennzeichen.**

㉗ Es wird ein Verfahren vorgeschlagen, das zum Übertragen von digitalen Rufkennzeichen über einen Funkkanal in einem Teilnehmernetz dient. Das Teilnehmernetz umfaßt maximal $10^{m+n}$ Teilnehmerstationen, und die Rufkennzeichen weisen einen n-stelligen ersten Kennzeichenteil und einen m-stelligen zweiten Kennzeichenteil auf. Zum Erzeugen und Auswerten der Rufkennzeichen enthält jede Teilnehmerstation einen Geber und einen Auswerter. Der Auswerter ist auf das individuelle Rufkennzeichen seiner Teilnehmerstation fest kodiert.

Um dieses Verfahren auch bei einer verringerten Teilnehmerzahl von maximal $10^m$ Teilnehmerstationen einsetzen zu können, wobei volle Kompatibilität vorausgesetzt wird, werden die Geber und Auswerter der Teilnehmerstationen umkodiert. Im Geber erhält der erste Kennzeichenteil eine für den gerufenen Teilnehmer bestimmte Information und der zweite Kennzeichenteil die Rufnummer der jeweils gewünschten Teilnehmerstation. Jede Teilnehmerstation weist einen Zwischenspeicher zum Speichern der empfangenen Rufkennzeichen auf. Die Auswerter der Teilnehmerstationen werden derart kodiert, daß sie nur den zweiten Kennzeichenteil auswerten. Nur derjenige Auswerter, der Übereinstimmung zwischen seinem fest kodierten zweiten Kennzeichenteil und dem empfangenen zweiten Kennzeichenteil feststellt, löst eine Anzeige des ersten Kennzeichenteils aus.

EP 0 123 773 A1

8/83
EK/PLI Scht/Li
25. April 1983

0123773

/

ROBERT BOSCH GMBH, 7000 Stuttgart 1

## Verfahren zum Übertragen von digitalen Rufkennzeichen

### Stand der Technik

Die Erfindung geht von einem Verfahren nach der im Oberbegriff des Anspruchs 1 angegebenen Gattung aus.

Durch eine "Empfehlung für ein binäres Datenübertragungsverfahren für Kennungs-, Selektivruf- und Datenübertragung im Bereich des nichtöffentlichen beweglichen Landfunks" des Zentralverbandes der Elektroindustrie (ZVEI) aus dem Jahre 1979 ist es bekannt, die Teilnehmer eines Funknetzes über einen gemeinsamen Funkkanal mittels Datentelegramme zu rufen. Ein derartiges binäres Datentelegramm beginnt mit einem Telegrammvorlauf, an das sich eine Blocksynchronisation, ein Betriebsartenkennzeichen, ein dreistelliger erster Kennzeichenteil (Raute, Hersteller), ein dreistelliger zweiter Kennzeichenteil (Rufnummer) und ein Redundanzteil anschließen. Jede Stelle der Kennzeichenteile umfaßt vier bit. Beide Kennzeichenteile bilden zusammen ein sechsstelliges Rufkennzeichen, so daß - ein dekadisches Kennzeichensystem vorausgesetzt - maximal $10^6$ Teilnehmerstationen je ein individuelles Rufkennzeichen zugeordnet werden kann.

Der vorliegenden Erfindung liegt die Aufgabe zugrunde, das bekannte Verfahren derart zu erweitern, daß es bei voller Kompatibilität wahlweise für ein Teilnehmernetz entsprechend den Empfehlungen des ZVEI oder für ein Teilnehmernetz mit einer erheblich geringeren Teilnehmerzahl eingesetzt werden kann, ohne daß es dadurch zu einer Erhöhung der Redundanz kommt.

...

## Vorteile der Erfindung

Das erfindungsgemäße Verfahren mit den kennzeichnenden Merkmalen des Anspruchs 1 hat den Vorteil, daß das bestehende Teilnehmernetz lediglich durch Umkodierung von Geber und Auswerter der Teilnehmerstationen auf ein kleineres Teilnehmernetz umschaltbar ist, wobei die Kompatibilität beider Teilnehmernetze gewährleistet wird. Als weiterer Vorteil ist anzusehen, daß durch die Übertragung und Anzeige einer für den gerufenen Teilnehmer bestimmten zusätzlichen variablen oder festen Information eine Verbesserung der Informationsmöglichkeiten erreicht wird.

Durch die in den Unteransprüchen aufgeführten Maßnahmen sind vorteilhafte Weiterbildungen und Verbesserungen des im Anspruch 1 angegebenen Verfahrens möglich. Besonders vorteilhaft ist das Verfahren, wenn die bestimmte Information eine von der rufenden Teilnehmerstation frei wählbare zusätzliche Information ist. Dann kann mit der Übermittlung eines Datentelegramms bzw. des Rufkennzeichens eine wichtige Zusatzinformation an die gerufene Teilnehmerstation geleitet werden, in der diese Information zum Beispiel mittels eines Displays angezeigt wird.

## Beschreibung der Erfindung

Das erfindungsgemäße Verfahren zum Übertragen von digitalen Rufkennzeichen geht davon aus, daß die mehrstelligen Rufkennzeichen über einen gemeinsamen Funkkanal eines maximal $10^{m+n}$ Teilnehmerstationen umfassenden Teilnehmernetzes übertragen werden. Die Rufkennzeichen setzen sich aus einem n-stelligen ersten Kennzeichenteil und einem m-stelligen zweiten Kennzeichenteil zusammen und werden in Form von Datentelegrammen übertragen.

...

Der Selektivruf-(Kennungs-)Geber der Teilnehmerstationen
- im folgenden nur als Geber bezeichnet - wird bei dem
maximal $10^{m+n}$ Teilnehmerstationen umfassenden Netz folgendermaßen kodiert. Der erste Kennzeichenteil setzt sich
aus einem Rautenkennzeichen und einem Benutzerkennzeichen
zusammen, die beide fest kodiert sind. Dabei kennzeichnet
das Rautenkennzeichen denjenigen örtlichen Teilbereich des
gesamten Funkbereiches, in welchem die zu einer Zentrale,
zum Beispiel eines Unternehmens, gehörenden ortsfesten oder
mobilen Teilnehmerstationen sich befinden. Das Benutzerkennzeichen ist für alle zu einer Zentrale von mehreren in
dem gesamten Funkbereich vorhandenen Zentralen gehörenden
Teilnehmerstationen gleich.

Der zweite Kennzeichenteil ist frei kodierbar und entspricht der m-stelligen Rufnummer der jeweils zu rufenden
Teilnehmerstation.

Bei dem der ZVEI-Empfehlung entsprechenden Verfahren sind
m und n gleich groß, und zwar je dreistellig.

Der Auswerter für die Rufkennzeichen ist bei dem maximal
$10^{m+n}$ Teilnehmerstationen umfassenden Funknetz auf das
Rautenkennzeichen, das Benutzerkennzeichen und auf die Rufnummer der betreffenden Teilnehmerstation fest kodiert. Er
wertet alle (m + n) Stellen aus. Nur wenn ein empfangenes
Rufkennzeichen vollständig als mit dem eigenen Rufkennzeichen übereinstimmend erkannt wird, gibt der Auswerter
ein bestimmtes Signal ab, durch das beispielsweise ein optisches oder akustisches Signal in der Teilnehmerstation ausgelöst wird, das den Benutzer der Teilnehmerstation auf das
Vorliegen eines Anrufes aufmerksam macht.

...

Soll nun anstelle eines Teilnehmernetzes mit maximal $10^{m+n}$ Teilnehmern ein kleineres Teilnehmernetz mit maximal $10^{m}$ Teilnehmern treten, so wird - gleicher Aufbau der Datentelegramme und volle Kompatibilität vorausgesetzt - eine Umschaltung vorgenommen. Diese besteht darin, daß Geber und Auswerter in der nachstehend beschriebenen Weise umkodiert werden.

Im Geber wird die Rufnummer der zugehörigen Teilnehmerstation fest kodiert (= erster Kennzeichenteil) und die Rufnumer der zu rufenden Teilnehmerstation (= zweiter Kennzeichenteil) eingegeben. Übermittelt wird in diesem Fall ein Rufkennzeichen gleicher Stellenzahl wie bei dem Verfahren mit maximal $10^{m+n}$ Teilnehmerstationen, an die Stelle des Benutzerkennzeichens tritt jedoch die eigene Rufnummer der Teilnehmerstation.

Dem Auswerter einer jeden Teilnehmerstation ist ein elektronischer Speicher zugeordnet, der grundsätzlich das empfangene und noch nicht ausgewertete Rufkennzeichen zwischenspeichert. Der Auswerter wird nun derart fest kodiert, daß er den der Rufnummer der jeweils rufenden Teilnehmerstation entsprechenden ersten Kennzeichenteil eines eintreffenden Rufkennzeichens nicht auswertet. Auf die in dem zweiten Kennzeichenteil des Rufkennzeichens enthaltene Rufnummer ist der Auswerter fest kodiert. Hat der Auswerter die eigene Rufnummer erkannt, so gibt er ein bestimmtes Signal an den Speicher ab, der nur den ersten Kennzeichenteil, das heißt die Rufnummer der rufenden Teilnehmerstation, ausspeichert und an ein Display zur Anzeige weiterleitet. Auf dem Display erscheint dann automatisch die Rufnummer der rufenden Teilnehmerstation.

In einer alternativen Ausführung des Verfahrens wird bei dem Auswerter einer Teilnehmerstation, die beispielsweise eine Zentralstation für mehrere zugehörige Zentralstationen bildet,

...

0123773

auf die feste Kodierung der eigenen Rufnummer absichtlich
verzichtet. Die geberseitige Erzeugung des Rufkennzeichens
und dessen Übertragung erfolgt in der obenstehend erläuterten Weise. Der Auswerter wertet dann jedoch keine eintreffenden Rufkennzeichen mehr aus. Dafür wird das in dem
Speicher jeweils gespeicherte Rufkennzeichen automatisch
ausgelesen und an das Display weitergeleitet, welches dann
jeweils die Rufnummer des rufenden und des gerufenen Teilnehmers anzeigt. Diese Art der Anzeige entspricht einer
Kennungsauswertung.

Die vorstehend erwähnten Festkodierungen von Geber und Auswerter werden vorzugsweise mit einem entsprechend kodierten
Kodierstecker erzeugt, der in eine entsprechende Aufnahme
der Teilnehmerstation einsteckbar ist.

8/83
EK/PLI Scht/Li
25. April 1983

ROBERT BOSCH GMBH, 7000 Stuttgart 1

Ansprüche

1. Verfahren zum Übertragen von digitalen Rufkennzeichen über einen Funkkanal in einem Teilnehmernetz, in welchem jeder von maximal $10^{m+n}$ Teilnehmerstationen ein individuelles Rufkennzeichen aus einem n-stelligen ersten Kennzeichenteil und einem m-stelligen zweiten Kennzeichenteil zugeordnet ist und in welchem das Rufkennzeichen in einem Geber der jeweils rufenden Teilnehmerstation erzeugt und in einem auf das individuelle Rufkennzeichen der gerufenen Teilnehmerstation kodierten Auswerter ausgewertet wird, dadurch gekennzeichnet, daß das Verfahren wahlweise von einem maximal $10^{m+n}$ auf ein maximal $10^m$ Teilnehmerstationen umfassendes Teilnehmernetz umschaltbar ist, indem die Geber der Teilnehmerstationen derart kodiert werden, daß der erste Kennzeichenteil eine für den gerufenen Teilnehmer bestimmte Information und der zweite Kennzeichenteil die Rufnummer der gewünschten Teilnehmerstation enthält und daß in allen Teilnehmerstationen das (n + m)stellige Rufkennzeichen zwischengespeichert wird und die Auswerter derart programmiert sind, daß sie nur den zweiten Kennzeichenteil auswerten und nur der Auswerter der gerufenen Station die für ihn bestimmte Rufnummer erkennt und eine Anzeige des ersten Kennzeichenteils des zwischengespeicherten Rufkennzeichens auslöst.

2. Verfahren nach Anspruch 1, dadurch gekennzeichnet, daß die Stellenzahl für beide Kennzeichenteile des Rufkennzeichens gleich ist (m = n).

...

3. Verfahren nach Anspruch 1, dadurch gekennzeichnet, daß die bestimmte Information der Rufnummer der rufenden Teilnehmerstation entspricht.

4. Verfahren nach Anspruch 1, dadurch gekennzeichnet, daß die bestimmte Information eine von der rufenden Teilnehmerstation frei wählbare zusätzliche Information ist.

5. Verfahren nach Anspruch 1, dadurch gekennzeichnet, daß die Anzeige des ersten Kennzeichenteils des zwischengespeicherten Rufkennzeichens in einem Display der Teilnehmerstation erfolgt.

6. Verfahren nach Anspruch 1 oder einem der folgenden, dadurch gekennzeichnet, daß im Auswerter einer Teilnehmerstation (Zentralstation) die eigene Rufnummer nicht kodiert ist, wodurch keine Auswertung von Rufkennzeichen stattfindet und der zwischengespeicherte erste und zweite Kennzeichenteil eines jeden eintreffenden Rufkennzeichens angezeigt wird.

7. Verfahren nach Anspruch 1, dadurch gekennzeichnet, daß die Anzeige mit einem (m + n)stelligen Display erfolgt.

8. Verfahren nach Anspruch 6, dadurch gekennzeichnet, daß die Anzeige mit einem m-stelligen Display erfolgt.

9. Verfahren nach einem der Ansprüche 1 bis 8, dadurch gekennzeichnet, daß die feste Kodierung von Geber und Auswerter der Teilnehmerstationen mittels eines mit einer entsprechenden Kodierung versehenen Kodiersteckers vorgenommen wird.

**Europäisches Patentamt**

**EUROPÄISCHER RECHERCHENBERICHT**

0123773

EP 84 10 0097

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | PHILIPS TELECOMMUNICATION REVIEW, Band 36, Nr. 1, April 1978, Seiten 41-52, Hilversum, NL; A.M. MORRIEN et al.: "Digital paging encoders/decoders" * Seiten 42-43, Kapitel 2 "The digital code"; Seiten 48-57, Kapitel 7 "OQ2209 and OQ2222"; Kapitel 8 "Pocket pagers"; Bildunterschrift zu Figur 13 * | 1,4,5, 8,9 | H 04 Q 7/02 |
| A | HASLER MITTEILUNGEN, Band 39, Nr. 3/4, Dezember 1980, Seiten 68-71, Bern, CH; P. HÄNNI: "Der Display-Empfänger RPD" * Seite 68, rechte Spalte, Zeile 9 - Seite 69, linke Spalte, Zeile 10 * | 1-5,8 | |
| A | GB-A-2 024 567 (NEC) * Seite 1, Zeilen 55-59; Seite 1, Zeilen 95-128; Figur 2 * | 1-5,8 | **RECHERCHIERTE SACHGEBIETE (Int. Cl. 3)** H 04 B H 04 Q |
| A | TECHNISCHE MITTEILUNGEN AEG-TELEFUNKEN, Band 68, Nr. 6/7, Seiten 287-290, Berlin, DE; H. KOCH: "Personensuch-Funkanlage D 600D für Städte" * Seite 287, Absatz "Betriebsablauf"; Seite 289, linke Spalte, Zeilen 16-25 * | 1,3-5, 8,9 | |

Der vorliegende Recherchenbericht wurde für alle Patentansprüche erstellt.

-/-

| Recherchenort DEN HAAG | Abschlußdatum der Recherche 29-05-1984 | Prüfer GULDNER H.D. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | NEC RESEARCH & DEVELOPMENT, Band 7, Nr. 50, Juli 1978, Seiten 1-10, Tokyo, JP; T. MIZUKAMI et al.: "NEC digital paging system" * Seite 2, Abschnitt: "Signal composition" * <br><br> ----- | 1 | |
| | | | RECHERCHIERTE SACHGEBIETE (Int. Cl. ³) |

Der vorliegende Recherchenbericht wurde für alle Patentansprüche erstellt.

| Recherchenort | Abschlußdatum der Recherche | Prüfer |
|---|---|---|
| DEN HAAG | 29-05-1984 | GULDNER H.D. |